# EUROPEAN PATENT SPECIFICATION

(11) **EP 2 886 428 B1**
(45) Date of publication and mention of the grant of the patent: **14.09.2016**
(21) Application number: 14198398.1
(22) Date of filing: 17.12.2014
(51) Int. Cl.: B62J 1/06, B62J 1/08, B62K 19/36

(54) **Seat tube assembly for bicycle**
Fahrradsitzrohranordnung
Ensemble de tube de selle pour bicyclette

(30) Priority: 17.12.2013 TW 102223826
(43) Date of publication of application: 24.06.2015
(73) Proprietor: J.D Components Co., Ltd., Shou Shui Hsiang, Chang Hua Hsien (TW)
(72) Inventor: Feng, PIN-CHIEN, CHANG HUA HSIEN (TW); Huang, CHUN-WEI, 522 CHANGHUA COUNTY (TW); Kuo, WEN-CHIA, CHANG HUA HSIEN (TW); Chuang, YU-JEN, CHANG HUA HSIEN (TW)
(74) Representative: Straus, Alexander

(56) References cited:
- EP-A1- 2 457 811
- WO-A2-97/14607
- JP-U- S 515 164

## Description

### BACKGROUND OF THE INVENTION

### 1. Technical Field

The present invention relates to bicycles, and more particularly to a seat tube assembly for bicycles.

### 2. Description of Related Art

Proper position of a bicycle seat is great importance to a cyclist's comfortable riding, and for this reason various adjusting mechanisms have been developed to allow altitudinal adjustment, positional adjustment and/or angular adjustment between a bicycle seat and its seat tube so that a cyclist can make adjustment according to his/her personal needs.

As to the known approaches to altitudinal adjustment, a prior Patent No. WO 2004/023937 involves using a cable to pull a hinge and in turn drive its upper and lower arms to rotate with respect to each other, thereby making the upper arm push a valve stem to establish oil circulation in a valve seat and allow altitudinal adjustment between the seat post and the seat tube. However, in the prior-art scheme, the upper and lower arms when rotating with respect to each other tend to be affected by lateral force and hindered from smooth movement, so the operation is relatively energy-consuming. Hence, the prior-art scheme needs to be improved.

Besides, WO 97/14607 discloses a device for raising and lowering a bicycle saddle. It is an objective of WO 97/14607 to develop a structurally more simple embodiment of prior-art device so that there is more comfortable and precisely settable height adjustment of the saddle. To attain the object, an actuating member is in the form of a lever arrangement which lowers and raises with respect to force and distance, and the lever (release lever) presses directly on a release mechanism.

### BRIEF SUMMARY OF THE INVENTION

The primary objective of the present invention is to provide a seat tube assembly for bicycles that is operationally convenient and structurally reliable.

For achieving the foregoing objective, the disclosed seat tube assembly comprises a seat tube, a seat post, a regulating valve, and a controlling component. The seat post is telescoped and an axially movable in the seat tube. The regulating valve has a valve seat and a valve stem. The valve seat is fixed in the seat post and the valve stem is located in the seat tube. The valve stem has its upper end inserted and axially movable in the valve seat. The controlling component has a trigger lever, a driving arm, an auxiliary pusher, a cable, and a control switch. The trigger lever abuts against a lower end of the valve stem of the regulating valve. The driving arm has one end pivotally connected to the trigger lever. The auxiliary pusher has one end pivotally connected to the trigger lever. The cable has one end connected to an opposite end of the driving arm. The cable has an opposite end connected to the control switch.

With the foregoing configuration, when a cyclist operates the control switch, the cable draws the driving arm, so that the trigger lever is pushed by the driving arm and the auxiliary pusher simultaneously to make the valve stem perform linear displacement, thereby establishing or cutting oil circulation inside the valve seat, and in turn allowing or disallowing altitudinal adjustment of the seat post with respective to seat tube.

### BRIEF DESCRIPTION OF THE SEVERAL VIEWS OF THE DRAWINGS

FIG. 1 is a perspective view of the present invention.
FIG. 2 is a partial, cross-sectional view of the present invention, showing the seat post is blocked from moving with respective to the seat tube.
FIG. 3 is a partial, enlarged view of FIG. 2, showing the trigger lever not propping against the valve stem.
FIG. 4, similar to FIG. 3, shows the trigger lever propping against the valve stem.

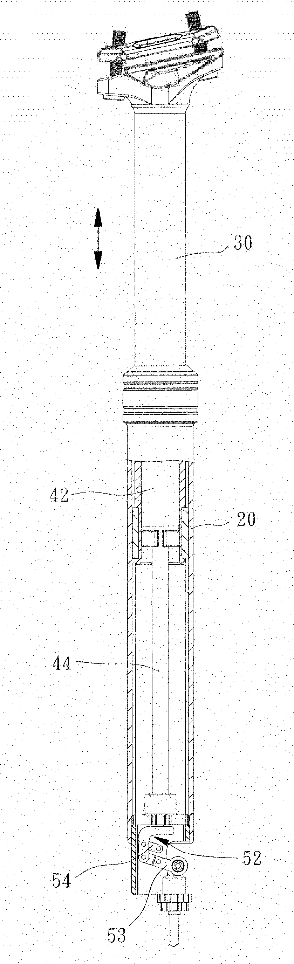

FIG. 5, similar to FIG. 2, shows the seat post is allowed to move with respective to the seat tube.

### DETAILED DESCRIPTION OF THE INVENTION

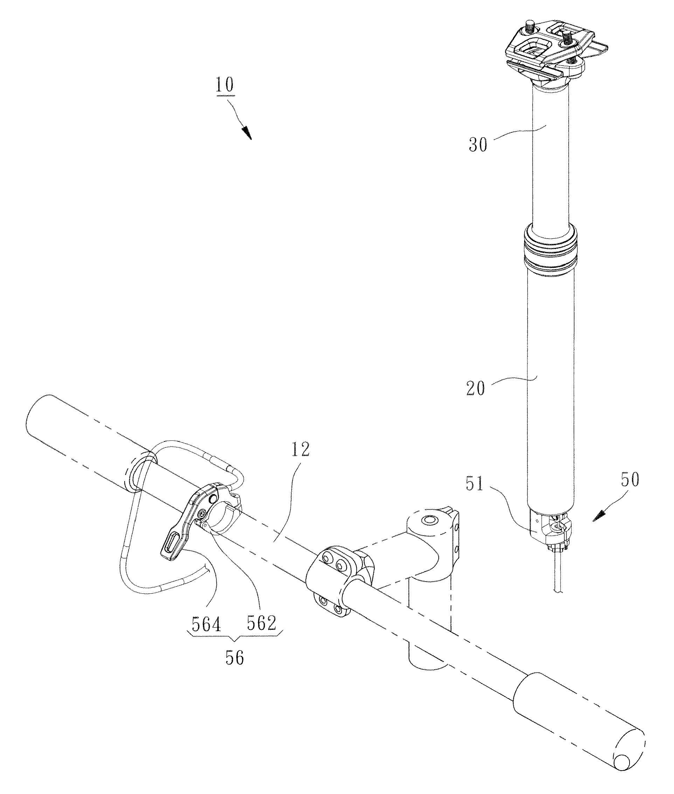

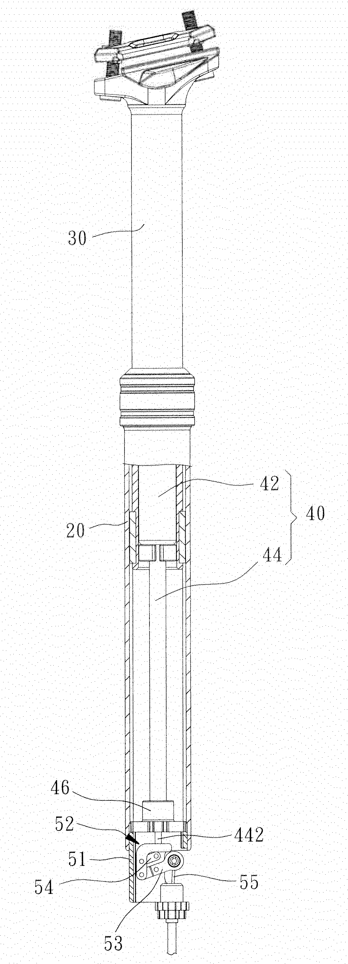

Referring to FIG. 1 and FIG. 2, according to the present invention, a seat tube assembly 10 comprises a seat tube 20, a seat post 30, a regulating valve 40, and a controlling component 50.

The seat post 30 has an upper end for a seat (not shown) to mount thereon, and has a lower end inserted into the upper end of the seat tube 20 so that the lower end is received and axially (i.e. vertically) movable in the seat tube 20.

The regulating valve 40 has a valve seat 42 and a valve stem 44. The valve seat 42 is fixed in the seat post 30 and moves with the seat post 30. The valve stem 44 is received in the seat tube 20 such that its upper end is inserted and axially movable in the valve seat 42 and its lower end 442 passes through a stem holder 46 and extends to the lower end of the seat tube 20. Thereby, the lower end 442 of the valve stem 44 when pushed by an external force can move and establish or cut the oil circulation in the valve seat 42.

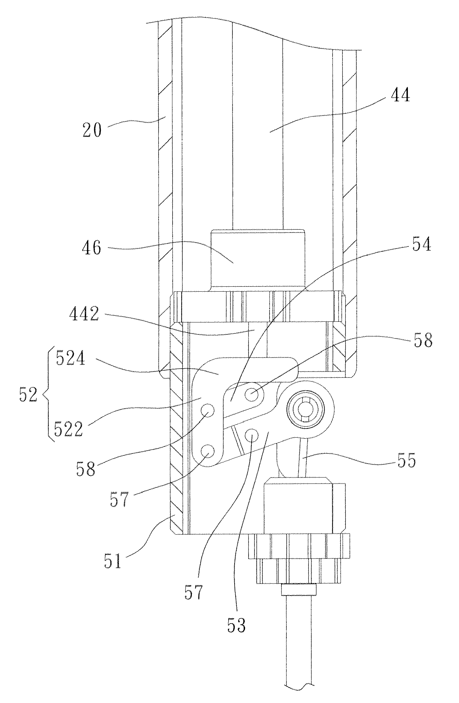

As shown in FIG. 2 and FIG. 3, the controlling component 50 has a base 51, a trigger lever 52, a driving arm 53, an auxiliary pusher 54, a cable 55, and a control switch 56. The base 51 is attached to the lower end of the seat tube 20. The trigger lever 52 is contained in the base 51 and has a vertical section 522 and a horizontal section 524. The horizontal section 524 extends horizontally from the upper end of the vertical section 522 and abuts against the lower end 442 of the valve stem 44. The driving arm 53 has its center pivotally connected to base 51 through a first pivot 57. Furthermore, the driving arm 53 has one end pivotally connected to the vertical section 522 of the trigger lever 52 through another first pivot 57, and has an opposite end connected to one end of the cable 55. The auxiliary pusher 54 is located between the horizontal section 524 of the trigger lever 52 and the driving arm 53, with its one end pivotally connected to base 51 through a second pivot 58, and its opposite end pivotally connected to the vertical section 522 of the trigger lever 52 through another second pivot 58. The second pivot 58 is above the first pivot 57 and parallel to the first pivot 57. The control switch 56 has a clamp 562 and an operating bar 564. The clamp 562 is detachably assembled with the bicycle frame. Preferably, the clamp 562 is mounted around the handlebar 12. The operating bar 564 is pivotally connected to the clamp 562 and is connected to the other end of the cable 55, for a cyclist to operate and thereby pull the cable 55.

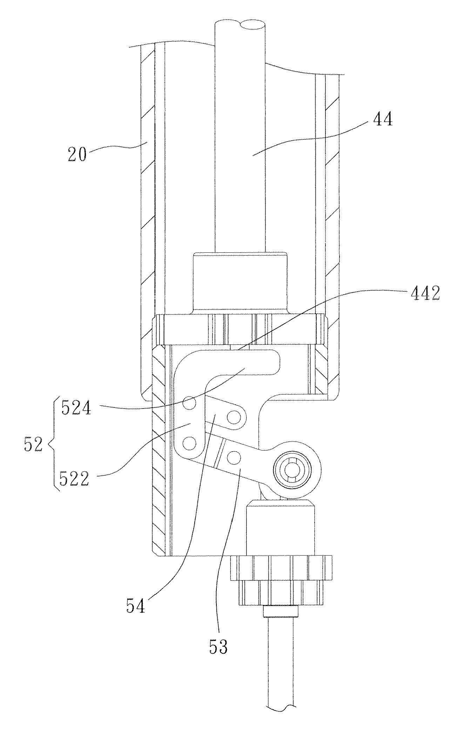

To make altitudinal adjustment of the seat, the operation begins by pressing the operating bar 564 downward to apply a pulling force to the cable 55, so that the cable 55 pulls the driving arm 53 downward, as shown in FIG. 3 and FIG. 4. Consequently, the driving arm 53 pivots to have its one end moving upward to push the trigger lever 52. During the upward movement of the trigger lever 52, the auxiliary pusher 54 moves with the trigger lever 52 and pivots, so its one end moves upward to push the trigger lever 52. As a result, the trigger lever 52 is affected by both the driving arm 53 and the auxiliary pusher 54 and has its horizontal section 524 moving upward to push the lower end 442 of the valve stem 44. Then the valve stem 44 performs linear displacement to establish the oil circulation in the valve seat 42. At this time, the cyclist can linearly displace the seat post 30 with respect to the seat tube 20 to further adjust the altitudinal position of the seat. When the desired position has been achieved, the cyclist releases the operating bar 564 so as to cease the pulling force applied by the cable 55 to the driving arm 53. Then a resilient member (not shown) provide in the valve seat 42 can push the valve stem 44 downward to cut the oil circulation in the valve seat 42, thereby positioning the seat post 30.

To sum up, with the auxiliary pusher 54, the disclosed seat tube assembly 10 can eliminate the lateral force that might otherwise act on the moving trigger lever 52, thereby ensuring smooth movement of the trigger lever 52 and allowing effort-saving operation.

## Claims

1. A seat tube assembly (10) for bicycle, the seat tube assembly (10) comprising:
a seat tube (20);
a seat post (30), being telescoped and an axially movable in the seat tube (20);
a regulating valve (40), having a valve seat (42) and a valve stem (44), wherein the valve seat (42) is fixed in the seat post (30) and the valve stem (44) is received in the seat tube (20) so that an upper end thereof is inserted and axially movable in the valve seat (42); and
a controlling component (50), having a trigger lever (52), a driving arm (53), an auxiliary pusher (54), a cable (55), and a control switch (56); the trigger lever (52) abutting against a lower end (442) of the valve stem (44) of the regulating valve (40), one end of the auxiliary pusher (54) being pivotally connected to the trigger lever (52), one end of the cable (55) being connected to an end of the driving arm (53), and an opposite end of the cable (55) being connected to the control switch (56); **characterized in that**:
the opposite end of the driving arm (53) is pivotally connected to the trigger lever (52).

2. The seat tube assembly (10) of claim 1, wherein the trigger lever (52) is installed in a base (51) that is attached to a lower end of the seat tube (20); the driving arm (53) having a center pivotally connected to the base (51) through a first pivot (57), the end of the driving arm (53) being pivotally connected to the trigger lever (52) through another first pivot (57), an opposite end of the auxiliary pusher (54) being pivotally connected to the base (51) through a second pivot (58), and the end of the auxiliary pusher (54) being pivotally connected to the trigger lever (52) through a second pivot (58) that is located above the first pivot (57) and is parallel to the first pivot (57).

3. The seat tube assembly (10) of claim 2, wherein the trigger lever (52) has a vertical section (522) and a horizontal section (524), in which the horizontal section (524) extends horizontally from an upper end of the vertical section (522) and abuts against the lower end (442) of the valve stem (44); the end of the driving arm (53) being pivotally connected to the vertical section (522) of the trigger lever (52) through the first pivot (57), and the end of the auxiliary pusher (54) being pivotally connected to the vertical section (522) of the trigger lever (52) through the second pivot (58).

4. The seat tube assembly (10) of any of claims 1 through 3, wherein the control switch (56) has a clamp (562) and an operating bar (564), in which the operating bar (564) is pivotally connected to the clamp (562) and connected to the cable (55).

## Patentansprüche

1. Sattelrohr-Aufbau (10) für ein Fahrrad , welcher umfasst:
ein Sattelrohr (20);
einen Sattelpfosten (30), der ausgezogen und in dem Sattelrohr (20) axial bewegbar ist;
ein Steuerventil (40), mit einem Ventilsitz (42) und einem Ventilstößel (44), worin der Ventilsitz (42) in dem Sattelpfosten (30) befestigt ist und der Ventilstößel (44) in dem Sattelrohr (20) aufgenommen ist, so dass ein oberes Ende davon inseriert und in dem Ventilsitz (42) axial bewegbar ist; und
eine Steuer-Komponente (50) mit einem Auslösehebel (52), einem Antriebsarm (53), einem Hilfsschieber (54), einem Kabel (55), und einer Steuerschaltung (56), worin der Auslösehebel (52) auf dem unteren Ende (442) des Ventilstößels (44) des Steuerventil (40) aufliegt, worin ein Ende des Hilfsschiebers (54) schwenkbar mit dem Auslösehebel (52) verbunden ist, worin ein Ende des Kabels (55) mit einem abgewandten Ende des Antriebsarms (53) verbunden ist, und worin ein abgewandtes Ende des Kabels (55) mit der Steuerschaltung (56) verbunden ist;
**dadurch gekennzeichnet, dass**:
das abgewandte Ende des Antriebsarms (53) schwenkbar mit dem Auslösehebel (52) verbunden ist.

2. Sattelrohr-Aufbau (10) nach Anspruch 1, worin der Auslösehebel (52) in einer Basis (51) installiert ist, die an das untere Ende des Sattelrohrs (20) angebracht ist, worin der Antriebsarm (53) ein Zentrum aufweist, das mit der Basis (51) über einen ersten Schwenkpunkt (57) schwenkbar verbunden ist, worin das Ende des Antriebsarms (53) mit dem Auslösehebel (52) über einen anderen ersten Schwenkpunkt (57) schwenkbar verbunden ist, worin ein abgewandtes Ende des Hilfsschiebers (54) mit der Basis (51) über einen zweiten Schwenkpunkt (58) schwenkbar verbunden ist, und worin das Ende des Hilfsschiebers (54) mit dem Auslösehebel (52) über einen zweiten Schwenkpunkt (58), der oberhalb des ersten Schwenkpunkts (57) liegt und parallel zu dem ersten Schwenkpunkt (57) ist, schwenkbar verbunden ist.

3. Sattelrohr-Aufbau (10) nach Anspruch 2, worin der Auslösehebel (52) einen vertikalen Bereich (522) und einen horizontalen Bereich (524) aufweist, worin sich der horizontale Bereich (524) horizontal von einem oberen Ende des vertikalen Bereichs (522) erstreckt und auf dem unteren Ende (442) des Ventilstößels (44) aufliegt, worin das Ende des Antriebsarms (53) mit dem vertikalen Bereich (522) des Auslösehebels (52) über den ersten Schwenkpunkt (57) schwenkbar verbunden ist, und worin das Ende des Hilfsschiebers (54) mit dem vertikalen Bereich (522) des Auslösehebels (52) über den zweiten Schwenkpunkt (58) schwenkbar verbunden ist.

4. Sattelrohr-Aufbau (10) nach einem der Ansprüche 1 bis 3, worin die Steuerschaltung (56) eine Klemme (562) und eine Betriebsstange (564) aufweist, worin die Betriebsstange (564) mit der Klemme (562) schwenkbar verbunden und mit dem Kabel (55) verbunden ist.

## Revendications

1. Ensemble de tube de selle (10) pour bicyclette, l'ensemble de tube de selle (10) comprenant :
un tube de selle (20) ;
une tige de selle (30) qui est télescopique et mobile axialement dans le tube de selle (20) ;
une soupape de réglage (40) ayant un siège de soupape (42) et une tige de soupape (44), dans lequel le siège de soupape (42) est fixé dans la tige de selle (30) et
la tige de soupape (44) étant réceptionnée dans le tube de selle (20) de manière à ce qu'une extrémité supérieure de celle-ci soit insérée dans le siège de soupape (42) et mobile axialement dans celui-ci : et
un élément de commande (50) ayant un levier de déclenchement (52), un bras d'actionnement (53), un organe de poussée auxiliaire (54), un câble (55) et un commutateur de commande (55) ; le levier de déclenchement (52) butant contre une extrémité inférieure (442) de la tige de soupape (44) de la soupape de réglage (40), une extrémité de l'organe de poussée auxiliaire (54) étant reliée de manière pivotante au levier de déclenchement (52), une extrémité du câble (55) étant reliée à une extrémité du bras d'actionnement (53), et une extrémité opposée du câble (55) étant reliée au commutateur de commande (56) ;
**caractérisé en ce que** :
extrémité opposée du bras d'actionnement (53) est reliée de manière pivotante au bras de déclenchement (52).

2. Ensemble de tube de selle (10) selon la revendication 1, dans lequel le levier de déclenchement (52) est mis en place dans une base (51) qui est fixée à une extrémité inférieure du tube de selle (20) ; le bras d'actionnement (53) ayant un centre relié de manière pivotante à la base (51) par l'intermédiaire d'un premier pivot (57), l'extrémité du bras d'actionnement (53) étant reliée de manière pivotante au levier de déclenchement (52) par l'intermédiaire d'un autre premier pivot (57), une extrémité opposée de l'organe de poussée auxiliaire (54) étant reliée de manière pivotante à la base (51) par l'intermédiaire d'un deuxième pivot (58), et l'extrémité de l'organe de poussée auxiliaire (54) étant reliée de manière pivotante au levier de déclenchement (52) par l'intermédiaire d'un deuxième pivot (58) qui est situé au-dessus du premier pivot (57) et est parallèle au premier pivot (57).

3. Ensemble de tube de selle (10) selon la revendication 2, dans lequel le levier de déclenchement (52) a une section verticale (522) et une section horizontale (524), dans lequel la section horizontale (524) s'étend horizontalement à partir d'une extrémité supérieure de la section verticale (522) et bute contre l'extrémité inférieure (442) de la tige de soupape (44) ; l'extrémité du bras d'actionnement (53) étant reliée de manière pivotante à la section verticale (522) du levier de déclenchement (52) par l'intermédiaire du premier pivot (57), et l'extrémité de l'organe de poussée auxiliaire (54) étant reliée de manière pivotante à la section verticale (522) du levier de déclenchement (52) par l'intermédiaire du deuxième pivot (58).

4. Ensemble de tube de selle (10) selon l'une quelconque des revendications 1 à 3, dans lequel le commutateur de commande (56) a une pince (562) et une barre de commande (564), dans lequel la barre de commande (564) est reliée de manière pivotante à la pince (562) et est reliée au câble (55).
